(19) Europäisches Patentamt / European Patent Office / Office européen des brevets

(11) **EP 2 137 569 B1**

(12) **FASCICULE DE BREVET EUROPEEN**

(45) Date de publication et mention de la délivrance du brevet:
**13.09.2017 Bulletin 2017/37**

(21) Numéro de dépôt: **08775613.6**

(22) Date de dépôt: **29.02.2008**

(51) Int Cl.:
**G02C 13/00** *(2006.01)*

(86) Numéro de dépôt international:
**PCT/FR2008/000268**

(87) Numéro de publication internationale:
**WO 2008/129168 (30.10.2008 Gazette 2008/44)**

(54) **PROCÉDÉ DE MESURE D'AU MOINS UN PARAMÈTRE GÉOMÉTRICO- PHYSIONOMIQUE D'IMPLANTATION D'UNE MONTURE DE LUNETTES DE CORRECTION VISUELLE SUR LE VISAGE D'UN PORTEUR**

VERFAHREN ZUR MESSUNG MINDESTENS EINES GEOMETRISCHEN/PHYSIOGNOMISCHEN PARAMETERS ZWECKS ANPASSUNG EINER BRILLE ZUR SICHTFELDKORREKTUR AN DAS GESICHT IHRES TRÄGERS

METHOD OF MEASURING AT LEAST ONE GEOMETRIC/PHYSIOGNOMIC PARAMETER FOR FITTING THE FRAME OF VISION-CORRECTION SPECTACLES TO THE FACE OF A WEARER

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **18.04.2007 FR 0702800**
**20.06.2007 FR 0704406**

(43) Date de publication de la demande:
**30.12.2009 Bulletin 2009/53**

(73) Titulaire: **Essilor International (Compagnie Générale d'Optique)**
**94220 Charenton-le-Pont (FR)**

(72) Inventeurs:
• **NAUCHE, Michel**
  **F-94220 Charenton (FR)**
• **CHAUVEAU, Jean-Pierre**
  **F-94220 Charenton Le Pont (FR)**
• **BARANTON, Konogan**
  **F-94220 Charenton Le Pont (FR)**
• **EVAIN, Sébastien**
  **91300 Massy (FR)**

(74) Mandataire: **Jacobacci Coralis Harle**
  **32, rue de l'Arcade**
  **75008 Paris (FR)**

(56) Documents cités:
**WO-A-2007/036288      DE-A1-102004 063 160**
**FR-A- 2 719 463      FR-A- 2 860 887**
**JP-A- 2005 185 431**

**Description**

DOMAINE TECHNIQUE AUQUEL SE RAPPORTE L'INVENTION

La présente invention concerne de manière générale la confection de lunettes de correction visuelle et plus précisément les mesures géométrico-physionomiques effectuées par l'opticien sur le porteur équipé des montures qu'il a choisies pour déterminer des données relatives à la configuration d'implantation des verres correcteurs en regard des yeux du porteur. Ces données sont typiquement exploitées pour le montage des lentilles correctrices sur la monture, en particulier pour leur centrage optique par rapport à l'oeil du porteur et/ou pour la conception optique personnalisée des lentilles correctrices.

ARRIÈRE-PLAN TECHNOLOGIQUE

La confection d'une lentille correctrice de lunettes comporte, d'une part, la conception optique et la mise en forme des faces de réfraction de la lentille et, d'autre part, l'adaptation de la lentille à la monture choisie. La présente invention traite de la mesure, sur le visage du porteur, de paramètres géométrico-physionomiques rendant compte de la configuration d'implantation des lunettes sur le visage du porteur. Ces paramètres sont susceptibles d'être exploités dans les deux étapes de confection d'une lentille correctrice, afin que la lentille exerce finalement la fonction optique corrective pour laquelle elle a été conçue et prescrite. Il s'agit en pratique, principalement, des paramètres suivants, considérés dans une posture orthostatique du porteur regardant l'horizon à l'infini :

- les écarts pupillaires, distances horizontales des pupilles au plan sagittal,
- les hauteurs pupillaires, distances sensiblement verticales des projections des pupilles suivant l'axe primaire de regard (à l'infini) sur la lentille par rapport au bord inférieur de la monture ou de la lentille détourée (définition dite « datum ») ou à la tangente à ce bord en son point le plus bas (définition dite « boxing »),
- la distance entre chaque lentille et l'oeil correspondant,
- l'angle d'inclinaison pantoscopique que forme le plan général de la monture ou de la lentille par rapport à la verticale.

Pour être efficacement pris en compte, ces paramètres doivent être mesurés avec soin et précision, ce qui s'avère difficile en pratique. Pour rationaliser la prise de mesure, on a proposé d'effectuer celle-ci à partir de photographies numériques du visage du porteur équipé de la monture. On connaît du document FR 27196463 que les écarts et hauteurs pupillaires peuvent être mesurés par traitement d'une image numérique frontale du visage du porteur. Pour obtenir la précision de mesure voulue, il a été jusqu'à présent considéré comme indispensable que l'appareil de capture d'image soit monté mobile verticalement sur une colonne de piètement assurant que l'axe optique de l'objectif de l'appareil de capture d'image reste horizontal et puisse être ajusté à la bonne hauteur. On cherche ainsi à éviter les erreurs de parallaxe verticale qui risqueraient autrement d'être commises sur les mesures des hauteurs d'oeil en particulier.
Toutefois, le dispositif de prise de mesure qui en résulte s'avère relativement encombrant et peu ergonomique pour un usage dans un espace de vente. En outre, le protocole de prise de mesure est perçu comme relativement contraignant, long et fastidieux tant par le porteur que l'opticien.

OBJET DE L'INVENTION

Le but de la présente invention est de remédier à tout ou partie des inconvénients précités en proposant un procédé de mesure par capture d'image frontale susceptible d'être mis en oeuvre avec un protocole de prise de mesure rapide et souple et au moyen d'un appareil de capture d'image nomade, sans colonne de piètement, tout en préservant une précision de mesure élevée.
A cet effet, on propose selon l'invention un procédé de mesure tel qu'énoncé dans la revendication 1 de la présente demande.
La capture d'image peut ainsi être effectuée dans une configuration imparfaite d'alignement ou de frontalité, c'est-à-dire avec un décalage vertical, de l'appareil de capture d'image par rapport au visage du porteur. L'erreur induite par l'angle de vue, ou parallaxe verticale, est corrigée lors du calcul grâce à la prise en compte directe ou indirecte de l'angle vertical d'observation absolu qui est précisément générateur de cette erreur. On peut grâce à cette correction assouplir et accélérer le protocole de capture d'image tout en préservant, voire améliorant, la précision globale de la mesure.
Le paramètre géométrico-physionomique comporte typiquement la hauteur d'un point remarquable de l'oeil par rapport à la monture et/ou l'angle d'inclinaison pantoscopique que forme le plan général de la monture ou de la lentille par rapport à la verticale.
Avantageusement, l'appareil de capture d'image est un appareil nomade tenu à la main par un opérateur lors de la capture d'image. On améliore ainsi considérablement la commodité et l'ergonomie de la prise de mesure.

Selon un mode de réalisation avantageux, pour mesurer l'angle vertical d'observation absolu, on mesure un angle d'assiette que forme l'axe optique de l'appareil de capture d'image avec sa projection sur le plan horizontal.

La mesure de l'angle d'assiette peut par exemple être fournie par un inclinomètre équipant l'appareil de capture d'image, adapté à fournir un signal représentatif de la valeur prise par l'angle d'assiette au moment de la capture d'image.

Alternativement, on peut aussi procéder de la façon suivante. Préalablement à la capture d'image, on équipe la tête du porteur d'un dispositif d'horizon artificiel comportant un élément de référence d'horizon mobile en rotation autour d'un axe perpendiculaire au plan sagittal et adapté à conserver une position fixe par rapport au plan horizontal, cet élément de référence d'horizon ayant une caractéristique géométrique connue. Après la capture d'image, on identifie, sur l'image capturée, l'image de cet élément de référence d'horizon, on mesure une caractéristique géométrique de cette image correspondant à la caractéristique géométrique connue de cet élément de référence d'horizon et on calcule l'angle d'assiette en fonction de la caractéristique géométrique mesurée de l'image capturée et de la caractéristique géométrique connue de l'élément de référence d'horizon.

Avantageusement alors, le calcul de l'angle d'assiette est de plus fonction d'un angle d'observation relatif de référence formé entre, d'une part, une droite d'observation passant par un point de l'élément de référence d'horizon et par la pupille de l'appareil de capture d'image et, d'autre part, l'axe optique de l'appareil de capture d'image, cet angle d'observation relatif étant déduit de la mesure, sur l'image capturée, d'un décentrement de l'image de l'élément de référence d'horizon par rapport à un centre d'image associé à l'axe optique de l'appareil de capture d'image.

Pour mesurer l'angle vertical d'observation absolu, on peut, par exemple, combiner l'angle d'assiette avec un angle d'observation relatif formé entre la droite d'observation et l'axe optique de l'appareil de capture d'image. Cet angle d'observation relatif est déduit de la mesure, sur l'image capturée, d'un décentrement de l'image du point remarquable de l'oeil par rapport à un centre d'image associé à l'axe optique de l'appareil de capture d'image.

Alternativement, pour mesurer l'angle vertical d'observation absolu, on peut faire en sorte que, lors de la capture d'image, l'appareil de capture d'image soit orienté de telle sorte que le point remarquable soit centré sur une marque de centrage du système de visée de l'appareil de capture d'image. L'axe optique de l'appareil de capture d'image est alors confondu avec la droite d'observation, si bien que l'angle vertical d'observation absolu est égal à l'angle d'assiette.

En variante, pour mesurer l'angle vertical d'observation absolu, on peut aussi mesurer une altitude au moins relative de l'appareil de capture d'image par rapport à la tête du porteur.

Selon un aspect particulièrement avantageux de l'invention, on dispose sur la monture un élément de repérage pantoscopique qui possède au moins une caractéristique géométrique connue et qui est disposé de telle sorte que l'image frontale capturée au moyen de l'appareil de capture d'image intègre une image de l'élément de repérage pantoscopique. L'image de l'élément de repérage étant traitée pour en mesurer une caractéristique géométrique dépendant de la caractéristique géométrique connue, le calcul du paramètre géométrico-physionomique est fonction de la caractéristique géométrique mesurée et de la caractéristique géométrique connue de l'élément de repérage.

DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :

- la figure 1 est une vue de profil de la tête d'un porteur, équipée d'une paire de lunettes ;
- la figure 2 est une vue schématique en perspective d'un dispositif permettant la mesure de paramètres géométrico-physionomiques d'implantation des lunettes sur le visage du porteur conformément à l'invention ;
- la figure 3 est une vue en perspective d'un accessoire de repérage équipant la monture selon un premier exemple de réalisation ;
- la figure 4 est une vue schématique en élévation de profil, aux proportions déformées pour en faciliter la lecture, illustrant la capture d'une image frontale de la monture et de l'oeil avec les éléments de géométrie exploités dans le calcul des paramètres géométrico-physiologiques, selon un premier exemple de mise en oeuvre du procédé de mesure selon l'invention, utilisant l'accessoire de repérage de la figure 3 ;
- la figure 5 est une vue analogue à la figure 3, illustrant un second mode de réalisation de l'accessoire de repérage équipant la monture ;
- la figure 6 est une vue analogue à la figure 4, illustrant la capture d'une image frontale de la monture et de l'oeil avec les éléments de géométrie exploités dans le calcul des paramètres géométrico-physiologiques selon un second exemple de mise en oeuvre du procédé de mesure selon l'invention, utilisant l'accessoire de repérage de la figure 5
- la figure 7 est une vue de l'image capturée de l'élément de référence d'horizon ;
- la figure 8 est une vue analogue à la figure 7 illustrant une variante de l'élément de référence d'horizon et du procédé, pour la mesure d'un angle de roulis absolu de la tête du porteur ;

- la figure 9 est une vue analogue à la figure 8 illustrant une autre variante de l'élément de référence d'horizon et du procédé, pour la mesure d'un angle de roulis absolu de la tête du porteur.
- La figure 10 est une vue analogue à la figure 3, illustrant une variante du deuxième mode de réalisation de l'accessoire de repérage équipant la monture.

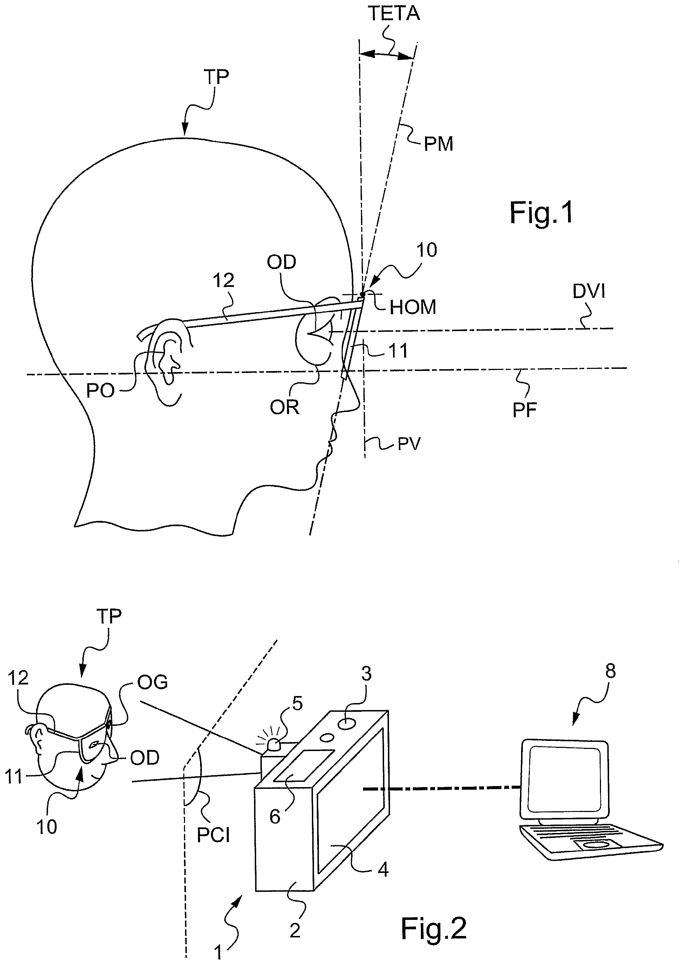

Dans la description qui suit, on considère, comme illustré par la figure 1, que le porteur est dans une configuration assise ou debout qui est telle que sa tête TP est droite, c'est-à-dire que le plan de Francfort PF relatif à la tête du porteur est sensiblement horizontal. Comme représenté sur la figure 1, le plan de Francfort PF est défini comme le plan passant par les points orbitaires inférieurs OR et le porion PO du porteur, le porion étant le point le plus élevé du conduit auditif, qui correspond au tragion de l'oreille. On dit également que le porteur prend une position orthostatique, position dans laquelle il réalise un minimum d'efforts. L'axe de regard ou droite de visée DV du porteur est initialement l'axe de regard primaire DVI, horizontal, correspondant au cas où le porteur regarde l'horizon droit devant lui à l'infini.

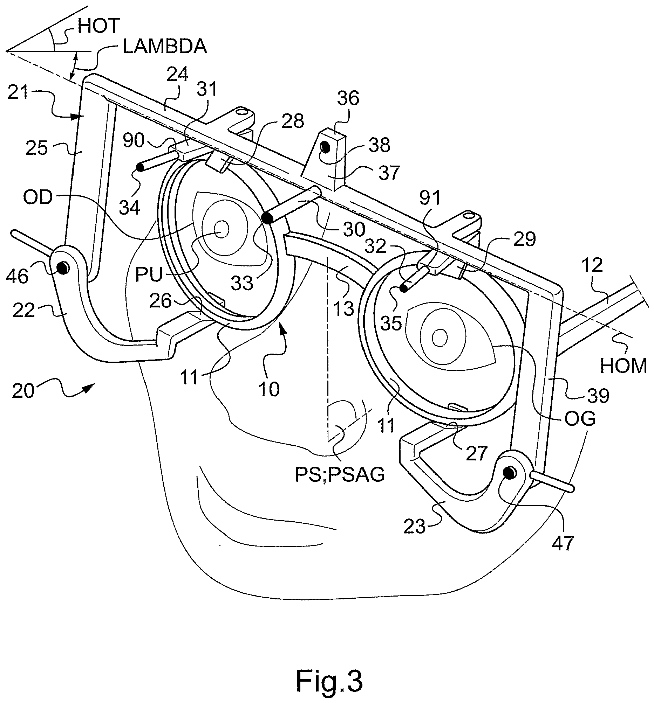

On définit aussi un plan médian ou sagittal PSAG de la tête du porteur TP, parallèle au plan de la figure 1 et schématisé sur la figure 3.

Le porteur est équipé d'une monture 10 qu'il a préalablement choisie et sur laquelle seront montées des lentilles exerçant une fonction optique de correction visuelle conforme à une prescription. Cette monture 10 comporte classiquement deux cercles 11, reliés par un pontet nasal 13, et deux branches 12. Chaque cercle 11 s'étend dans un plan moyen PM qui, vu de profil, forme avec un plan vertical PV (passant par exemple par le pontet nasal 13) un angle d'inclinaison verticale TETA autour d'une direction horizontale perpendiculaire au plan sagittal PSAG. Cet angle TETA est communément appelé angle pantoscopique.

Dans les exemples qui suivent, il s'agit principalement de déterminer les paramètres géométrico-physionomiques de la tête TP du porteur et de la monture 10 en vue de réaliser la conception personnalisée et/ou l'adaptation de la paire de lentilles correctrices à la physionomie de la tête du porteur et à la géométrie de la monture, en conformité avec la fonction optique de correction voulue.

Il s'agit en particulier de déterminer avec précision :

- d'une part, la hauteur H de la pupille PU de chaque oeil OD, OG par rapport au point le plus bas PB du cercle concerné 11 de la monture 10, pour permettre le centrage convenable de la lentille correctrice, c'est-à-dire le positionnement du point de centrage ou point pupillaire C de son référentiel optique par rapport à la monture, en vue de son détourage adapté au porteur et à la monture choisie ; cette hauteur H est en l'espèce la distance entre, d'une part, le point le plus bas PB du cercle 11 de la monture et, d'autre part, le point de centrage ou point pupillaire C défini par l'intersection de l'axe de regard primaire DVI (droite de visée à l'infini) avec le plan moyen PM du cercle 11 de la monture, d'autres définitions connues de la hauteur d'oeil pouvant alternativement être retenues ;
- d'autre part, l'angle d'inclinaison pantoscopique TETA du plan moyen du cercle 11 de la monture et, partant, des lentilles correctrices, pour permettre la conception optique personnalisée de l'une et/ou l'autre des deux faces de réfraction de la lentille correctrice.

Aux figures 2 et 3, on a représenté un dispositif de détermination de paramètres géométrico-morphologiques individuels d'un porteur équipé d'une paire de lunettes de présentation.

Ce dispositif comporte un appareil de capture d'image numérique 1 qui est par exemple, comme dans l'exemple illustré par la figure 2, similaire à un appareil de photographie numérique de poche du commerce de grand public, comportant un boîtier 2, un bouton de déclenchement 3 et un écran viseur 4. L'appareil de capture d'image 1 comporte de plus ici une source ou mire lumineuse 5, telle qu'une diode, apte à attirer le regard du porteur et à générer une image de reflet par la cornée de chaque oeil du porteur. Cette mire lumineuse 5 est adjacente à l'objectif de l'appareil de capture d'image 1. En variante, l'image du reflet cornéen peut être générée par un flash associé à l'appareil de capture d'image.

On pourra en variante avantageusement utiliser comme appareil de capture d'image une caméra vidéo ou un appareil de photographie à déclenchement rapide, apte à fournir une pluralité de prises de vue à partir desquelles on pourra calculer une moyenne ou appliquer un filtrage ou encore sélectionner la prise de vue la plus pertinente.

Quoi qu'il en soit, l'appareil de capture d'image 1 est apte à être manipulé par l'opticien pour capturer dans un plan facial de capture d'images PCI, une image du visage du porteur équipé de la monture.

L'appareil de capture d'image 1 possède d'autre part des moyens pour sa communication avec un ordinateur 8 équipé de moyens de communication correspondants. Les moyens de communication de l'appareil de capture d'image 1 et de l'ordinateur 8 sont du type filaires ou sans fil et, étant d'une conception courante quelconque, ne seront pas décrits. Avantageusement, ces moyens de communication s'intègrent à une architecture de réseau commune ou de liaison point à point permettant à l'appareil de capture d'image de communiquer avec plusieurs ordinateurs.

Le dispositif de mesure comporte de plus des moyens de mesure d'un angle d'assiette ou tangage ALPHA que forme l'axe optique AO de l'objectif de l'appareil de capture d'image 1 avec sa projection sur le plan horizontal PF. Dans ce premier exemple, l'appareil de capture d'image 8 est équipé d'un inclinomètre électronique embarqué 6 adapté à fournir un signal représentatif de la valeur prise par l'angle d'assiette ALPHA au moment de la capture d'image. On pourra par exemple utiliser un inclinomètre à encombrement réduit du genre capteur capacitif (comprenant un accéléromètre ou gravitomètre), capteur magnétique apte à mesurer le champ magnétique terrestre, ou un champ artificiel. On pourra aussi utiliser un système de capture de position tel que commercialisé par la société Polhemus, ou encore un gyroscope, etc.

Le dispositif de mesure comporte avantageusement, mais non nécessairement, un accessoire de repérage 20 qui est rapporté sur la monture 10 et qui permet, comme nous le verrons, de favoriser la fiabilité et la précision des prises de mesure.

Un exemple d'un tel accessoire de repérage 20 est représenté sur la figure 3 et décrit ci-après en configuration de service, c'est-à-dire rapporté sur une monture qui est elle-même considérée en configuration d'implantation sur le visage du porteur observant la posture orthostatique précédemment décrite. Cet accessoire comporte une ossature articulée composée d'un étrier 21 en forme de U renversé s'étendant dans un plan sensiblement vertical et de deux leviers de verrouillage 22, 23. L'étrier 21 possède une traverse horizontale 24 et deux montants verticaux 25, 39 dont les extrémités pointent vers le bas. Les deux leviers de verrouillage 22, 23 sont montés sur les extrémités des montants 25, 39 pour pivoter dans le plan de l'étrier, donc autour d'axes horizontaux. Un ressort (non représenté) est monté entre chaque levier de verrouillage 22, 23 et l'étrier pour solliciter en permanence ces leviers vers la traverse 24. Les leviers de verrouillage 22, 23 prennent ainsi appui sur les cercles de la monture 10 (ou directement sur les lentilles si les lunettes sont du type sans cercles, à lentilles percées) pour assurer le maintien de l'accessoire de repérage 20 sur la monture. Des patins 26, 27, 28, 29 en forme de V pourvus d'un revêtement anti-dérapant équipent la traverse 24 et les leviers 22, 23 pour accueillir les cercles de la monture (ou les bords des lentilles) et coopérer sans glissement avec ceux-ci, de manière à réaliser une fixation stable de l'accessoire de repérage 20 sur les lunettes. L'ensemble est agencé de telle sorte que l'étrier 21 présente un plan de symétrie PS qui, en service, se confond, approximativement au moins, avec le plan sagittal PSAG du porteur.

L'accessoire de repérage 20 est pourvu de plusieurs éléments de repérage, parmi lesquels on distingue :

- une licorne centrale 30 calée sur le plan de symétrie PS de l'étrier 21, s'étendant horizontalement en saillie de la traverse 24 en pointant vers l'avant (c'est-à-dire à l'opposé du visage du porteur) et possédant une extrémité libre arrondie teintée 33,
- deux licornes latérales 31, 32 symétriques l'une de l'autre par rapport au plan de symétrie PS, s'étendant horizontalement en saillie de la traverse 24 en pointant vers l'avant et en divergeant latéralement et possédant chacune une extrémité libre arrondie 34, 35 sur laquelle est ménagée une marque contrastée, par exemple noire ou teintée,
- un totem 36 centré sur le plan de symétrie PS, s'étendant verticalement en saillie supérieure de la traverse 24 de manière à surplomber la licorne centrale 30 et possédant une face avant 37 dont la partie supérieure porte une marque contrastée 38, par exemple noire ou teintée en forme de disque.

Les positions respectives dans l'espace à trois dimensions des marques des extrémités des licornes 30, 31, 32 et de la marque 38 constituent des caractéristiques géométriques connues qui sont mémorisées en tant que paramètres fixes du logiciel de calcul installé sur l'ordinateur 8.

Les deux licornes latérales 31, 32 sont solidaires des patins 28, 29 qui sont eux-mêmes montés sur la traverse 24 pour pivoter librement (avec un débattement angulaire limité et un rappel élastique dans une position angulaire donnée) autour d'axes sensiblement verticaux. Ainsi, lorsque l'accessoire de repérage 20 est monté sur la monture 10, les patins 28, 29 s'orientent d'eux-mêmes, grâce à leur forme en V, en correspondance avec l'orientation horizontale (c'est-à-dire autour de la verticale) du plan moyen du cercle 11 correspondant de la monture (ou du verre de présentation correspondant dans le cas de lunettes à montage percé, sans cercles).

Le dispositif de mesure décrit ci-dessus permet de mettre en oeuvre le procédé suivant de mesure de paramètres géométrico-physionomiques d'implantation de la monture 10 sur le visage du porteur.

Avant toute mesure, deux étapes d'étalonnage doivent être réalisées. Ces étapes d'étalonnage sont faites avant la première mesure, et il n'est pas nécessaire de les renouveler avant chaque mesure.

On réalise tout d'abord l'étalonnage de l'appareil de capture d'image 1 afin de définir une fonction caractéristique de cet appareil, permettant de déterminer, pour un point objet donné de l'espace dans le référentiel de l'appareil de capture d'image 1, les coordonnées du point image associé à ce point objet sur une image capturée.

Cet étalonnage est réalisé grâce à des images prises par l'appareil de capture d'image 1 de différentes mires planes connues. De telles méthodes sont connues et ont été décrites dans de nombreux documents, notamment dans un article intitulé « Modeling and Calibration of Automated Zoom Lenses », de R.G. Willson, publié dans Proceedings of the SPIE 2350: Videometrics III, pages.170-186, à Boston, Massachussetts, USA, en octobre 1994.

On réalise ensuite l'étalonnage de l'accessoire de repérage 20 en déterminant un modèle de cet accessoire de repérage 20. Pour cela, on détermine les positions relatives des marques contrastées 33, 38, 46, 47. Afin de déterminer ces positions relatives, on peut utiliser un minimum de quatre marques présentes sur l'accessoire de repérage 20, et, au minimum, trois captures d'image différentes. Le modèle de l'accessoire de repérage 20 comporte, d'une part, des paramètres globaux, communs à toutes les images, tels que des paramètres relatifs à la géométrie de l'accessoire de repérage 20 et, d'autre part, des variables intermédiaires propres à la configuration de capture d'image telles que la position et l'orientation de l'accessoire de repérage 20 par rapport à l'appareil de capture d'image 1. Ces paramètres et variables du modèle sont alors calculés par itération de manière à rapprocher, d'une part, les coordonnées calculées à partir du modèle pour les marques contrastées projetées sur l'image théorique, et, d'autre part, les coordonnées relevées sur les différentes images capturées pour ces mêmes marques.

Une fois l'appareil de capture d'image 1 et l'accessoire de repérage 20 étalonnés, on dispose des informations (équations, constantes, paramètres) nécessaires au traitement des images enregistrées par la suite. Ces informations permettent de relier la position des marques contrastées en deux dimensions sur une image quelconque et leurs positions réelles en trois dimensions.

A titre d'exemple, le processus suivant peut être suivi.

Un référentiel de l'accessoire de repérage est définit grâce à quatre marques, par exemple les marques 46, 47, 33, 38, et un point origine O. Un axe (Ox) passe par les deux marques 46 et 47, un axe (Oy) passe par la marque 38 et le point origine O, qui est défini comme le projeté orthogonal de la marque 38 sur l'axe (Ox), et un axe (Oz) est tel que le repère (O, Ox, Oy, Oz) soit cartésien orthonormé direct. Les coordonnées des quatre marques sont alors déterminées dans le référentiel de l'accessoire de repérage ainsi défini: la marque 47 a pour coordonnées (d, 0, 0), la marque 46 a pour coordonnées (-g, 0, 0), la marque 38 a pour coordonnées (0, h, 0) et la marque 33 a pour coordonnées (a, b, c).

On passe du référentiel de l'accessoire de repérage au référentiel de l'appareil de capture d'image 1 par une transformation comprenant une translation et trois rotations selon les trois axes du référentiel de l'accessoire de repérage. Le passage du référentiel de l'accessoire de repérage au référentiel de l'appareil de capture d'image 1 implique donc dans un cas quelconque:

- une rotation d'un angle N1 autour de l'axe (Oz), correspondant à la matrice de transformation R1:

$$R1 = \begin{pmatrix} \cos(N1) & \sin(N1) & 0 \\ -\sin(N1) & \cos(N1) & 0 \\ 0 & 0 & 1 \end{pmatrix}$$

- une rotation d'un angle N2 autour de l'axe (Ox), correspondant à la matrice de transformation R2:

$$R2 = \begin{pmatrix} 1 & 0 & 0 \\ 0 & \cos(N2) & \sin(N2) \\ 0 & -\sin(N2) & \cos(N2) \end{pmatrix}$$

- une rotation d'un angle N3 autour de l'axe (Oy), correspondant à la matrice de transformation R3:

$$R3 = \begin{pmatrix} -\cos(N3) & 0 & \sin(N3) \\ 0 & 1 & 0 \\ -\sin(N3) & 0 & -\cos(N3) \end{pmatrix}$$

- et une translation T = [Tx Ty Tz].

Le vecteur de coordonnées Mraci d'un point objet M de l'accessoire de repérage 20 dans le référentiel de l'appareil de capture d'image 1 peut alors être calculé à partir du vecteur de coordonnées connu Mrar de ce point dans le référentiel de l'accessoire de repérage 20 grâce à l'expression: Mraci = T + Mrar.R1.R2.R3.

Enfin, le vecteur de coordonnées Mimage du point image associé à ce point objet sur une image capturée peut être calculé à partir du vecteur de coordonnées Mraci de ce point objet dans le référentiel de l'appareil de capture 1 grâce à l'étalonnage de l'appareil de capture. La fonction caractéristique de l'appareil de capture 1 peut par exemple correspondre à une fonction polynômiale. On obtient alors les coordonnées (u,v) du point image associé à un point de coordonnées (x, y, z) de l'espace par une transformation pouvant s'écrire sous la forme: $u = k1.X^5 + k2.X^4.Y + ... + $

kn et v = k1'.X^5 + k2'.X^4.Y +... + kn', où X= x/z et Y= y/z. Avec un appareil de capture d'image de type trou sténopique, la transformation s'écrirait: u = f.x/z + u0 et v = f.y/z + v0. Les paramètres de la fonction caractéristique de l'appareil de capture d'image utilisé, par exemple (k1, k2, ..., kn, k1', k2', ..., kn'), ou (f, u0, v0), sont déterminés lors de l'étalonnage de l'appareil de capture d'image 1.

Les paramètres globaux d, g, h, a, b et c de l'accessoire de repérage et les variables intermédiaires N1, N2, N3, Tx, Ty, et Tz définissant sa position par rapport à l'appareil de capture d'image lors des différentes captures d'image sont déterminés de façon itérative afin de faire coïncider les positions théoriques des marques de l'accessoire de repérage sur l'image avec leurs positions réelles sur les images capturées.

L'opticien positionne la paire de lunettes de présentation 10 équipée de l'accessoire de repérage 20 sur le visage du porteur. Le porteur est en posture orthostatique, assis ou debout, avec sa tête droite, c'est-à-dire, comme rappelé ci-avant, que le plan de Francfort PF est sensiblement horizontal. L'opticien veille à ce que cette posture soit bien respectée.

On définit une droite boxing supérieure HOM joignant les sommets des patins en V 28, 29. Cette droite est sensiblement tangente aux sommets des deux cercles 11 de la monture et est donc sensiblement perpendiculaire au plan de symétrie de PS de la monture 10.

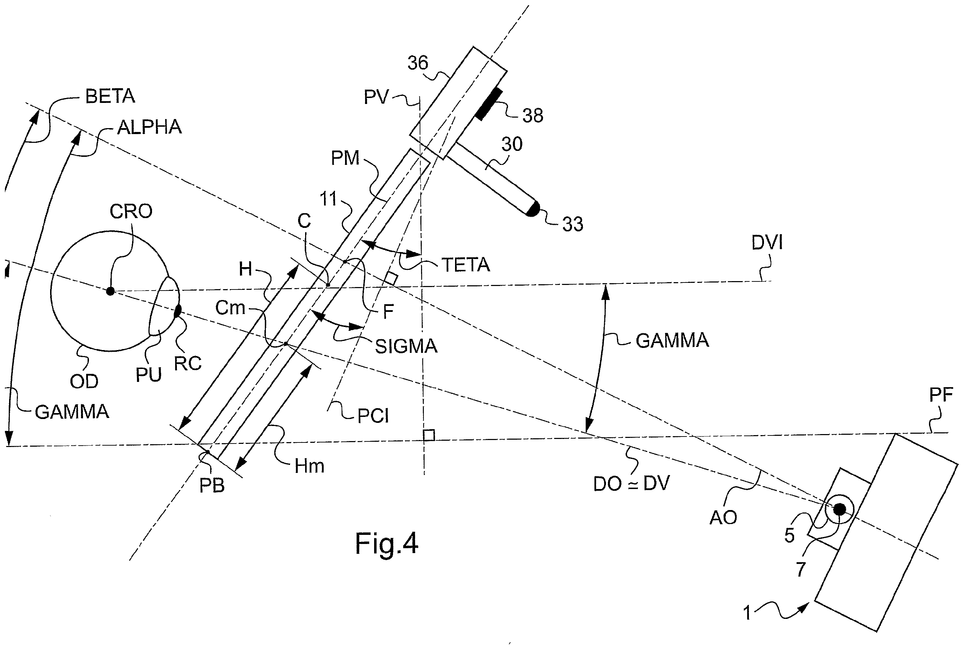

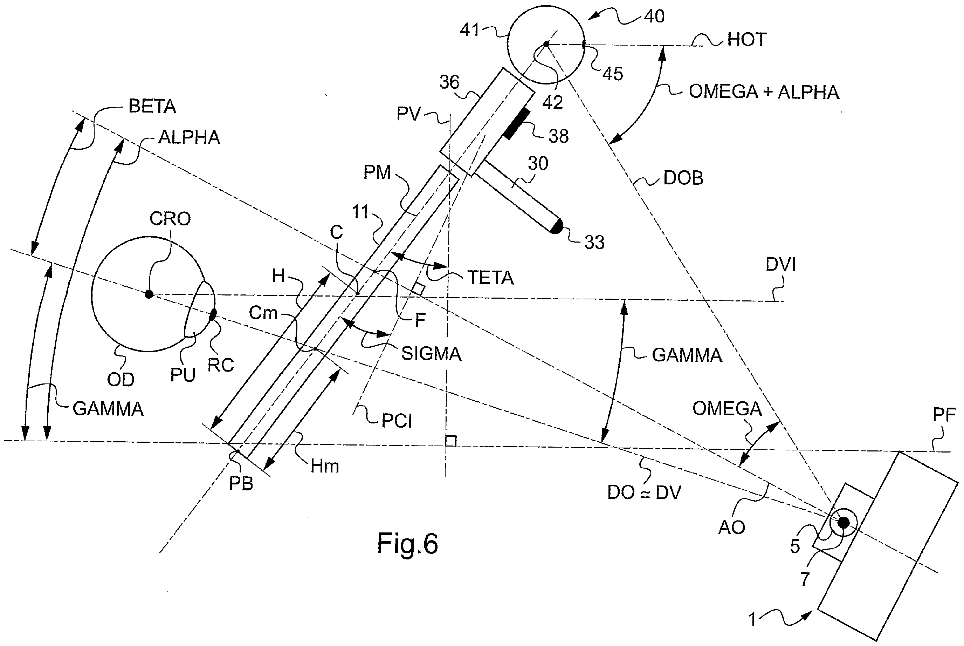

Dans la description qui suit du procédé de mesure, mis en oeuvre par le logiciel installé sur l'ordinateur 8, les règles de calcul appliquées par le logiciel et données à titre d'exemples font appel à des grandeurs géométriques définies en relation avec les figures. En particulier, les figures 4 et 6 sont des vues schématiques en élévation, en projection dans le plan PS ou PSAG suivant la direction de la droite boxing supérieure HOM.

L'opticien ou opérateur se saisit de l'appareil de capture d'image 1 et place ce dernier en face du visage du porteur et sensiblement à la même hauteur, à sa meilleure convenance. La frontalité est alors approximative, mais pas parfaite. L'opticien active la diode lumineuse 5 en enfonçant d'un premier niveau le bouton 3 et demande au porteur de regarder cette diode. On peut alors considérer, sans commettre d'erreur significative, que le porteur observe la pupille d'entrée de l'appareil de capture d'image 1, c'est-à-dire que l'axe de regard DV est confondu avec la droite d'observation DO. L'opticien demande au porteur de conserver néanmoins son port de tête en posture orthostatique comme décrit ci-dessus, ce que l'on peut supposer que ce dernier fera sans difficulté dans la mesure où l'appareil de capture d'image 1 est disposé de face, approximativement (bien qu'imparfaitement) à la hauteur du visage.

L'opticien ajuste l'appareil de capture d'image 1 à l'aide de l'écran viseur 4 pour cadrer convenablement le visage du porteur, puis déclenche une capture d'image au moyen du bouton 3, ainsi que, simultanément, la fourniture de l'angle d'assiette ALPHA par l'inclinomètre embarqué 6.

Si l'angle ALPHA excède une valeur seuil en valeur absolue, par exemple de 20 degrés, la mesure est rejetée et un message d'alerte visuel et/ou sonore est émis par l'appareil de capture d'image 1 ou par l'ordinateur 8 pour inviter l'opticien à capturer une nouvelle image en positionnant l'appareil de capture d'image 1 davantage de face à une hauteur plus proche de celle du porteur.

L'appareil de capture d'image 1 transmet l'image ainsi capturée à l'ordinateur 8 qui l'enregistre en mémoire vive ou de masse, en vue de son traitement par le logiciel de traitement et de calcul installé sur l'ordinateur 8.

L'appareil de capture d'image 1 transmet également à l'ordinateur 8, qui l'enregistre en mémoire vive ou de masse accessible au logiciel de traitement et de calcul installé sur l'ordinateur 8, l'angle d'assiette ALPHA que formait l'axe optique AO de l'appareil de capture d'image 1 avec sa projection sur le plan horizontal PF lors de la capture d'image et qui a été fourni par l'inclinomètre embarqué 6.

Le logiciel est conçu pour réaliser un calcul de rapprochement des caractéristiques géométriques connues avec les caractéristiques géométriques correspondantes de l'image plane capturée, mesurées par traitement de cette image et comptage de ses pixels, rapprochement duquel sont déduits :

- d'une part, compte-tenu d'une remise à l'échelle dimensionnelle de l'image capturée et d'un comptage de pixels sur cette image, les positions des pupilles des yeux du porteur par rapport à la monture (ou inversement), les dimension de la monture, etc., vues en projection dans le plan de capture d'image (qui est perpendiculaire à l'axe optique de l'appareil de capture d'image et qui peut être incliné par rapport au plan général de la monture),
- d'autre part, les valeurs des composantes horizontale et verticale de l'orientation relative de l'accessoire de repérage 20 par rapport à l'axe optique de l'appareil de capture d'image 1, le calcul de ces angles ne nécessitant pas nécessairement de remise à l'échelle.

La remise à l'échelle dimensionnelle de l'image consiste à calculer un facteur d'échelle donnant, dans la configuration de capture d'image, la proportionnalité entre une dimension réelle d'un élément géométrique dont l'image est capturée et le nombre de pixels de l'image de cet élément suivant la direction de la dimension considérée.

La remise à l'échelle est par exemple réalisée par le logiciel de traitement et de calcul en comparant la distance entre les images, sur l'image capturée, de deux points remarquables de l'accessoire de référence 20, tels que les extrémités de la traverse 24 ou les marques 46, 47, avec la distance réelle connue entre ces points remarquables (qui est intégrée au logiciel de traitement et de calcul en tant que paramètre).

Cette mise à l'échelle peut aussi être réalisée par la mesure, à l'aide d'un sous-ensemble de télémétrie, de la distance séparant l'appareil de capture d'image de la tête du porteur. On peut par exemple utiliser des systèmes de capture de position équipant, d'une part, le porteur ou la monture et, d'autre part, l'appareil de capture d'image 1 pour fournir la distance relative entre l'appareil de capture d'image 1 et la tête du porteur. On peut alternativement utiliser tout autre système de télémétrie par ultrason, laser, triangulation, stigmomètre type Dodin ou analogue.

Pour calculer l'angle pantoscopique TETA de la monture, le logiciel calcule, par décompte de pixels et compte-tenu de la remise à l'échelle, l'écart de hauteur entre, d'une part, l'image de la marque 38 du totem 36 et, d'autre part, l'image de l'extrémité 33 de la licorne centrale 33. On comprend en effet que le décalage vers l'avant de l'extrémité 33 de la licorne centrale 33 a pour effet de faire sensiblement varier l'altitude de cette extrémité 33 avec l'angle pantoscopique TETA. Il en résulte que cet écart de hauteur est représentatif d'un angle d'inclinaison verticale relative SIGMA que forme le plan moyen de la monture PM avec le plan de capture d'image PCI perpendiculaire à l'axe optique AO de l'objectif de l'appareil de capture d'image 1. Le logiciel combine alors cet angle SIGMA avec l'angle d'assiette ALPHA fourni par l'inclinomètre 6 de l'appareil de capture d'image 1, pour en déduire l'angle pantoscopique TETA recherché. Le logiciel intègre la formule

$$\text{TETA} = \text{ALPHA} + \text{SIGMA} \quad \text{ou} \quad \text{TETA} = \text{ALPHA} - \text{SIGMA}$$

selon la convention de signe des angles orientés.

Le logiciel calcule ensuite la hauteur d'oeil H. Il identifie à cet effet, sur l'image capturée, l'image d'un point remarquable prédéterminé, directement ou indirectement associé au visage du porteur ou à la monture 10. Ce point remarquable peut, typiquement, appartenir à l'oeil considéré, à la monture ou à l'accessoire de repérage. En l'espèce, le logiciel identifie sur l'image le centre de la pupille de l'oeil considéré qui correspond au reflet cornéen RC de la diode 5 de l'appareil de capture d'image 1.

On définit une droite d'observation DO reliant la pupille 7 de l'appareil de capture d'image 1 et le reflet cornéen RC. Le logiciel calcule un angle d'observation relatif BETA formé entre la droite d'observation DO et l'axe optique AO de l'appareil de capture d'image 1. Cet angle d'observation relatif BETA est directement déduit par le logiciel, compte-tenu de la remise à l'échelle, de la mesure, sur l'image capturée, d'un décentrement de l'image du reflet cornéen RC par rapport à un centre d'image associé à l'axe optique AO de l'appareil de capture d'image 1 et correspondant à l'image F' du point F d'intersection de l'axe optique AO avec le plan PM.

Le logiciel calcule alors un angle vertical d'observation absolu GAMMA que forme la droite d'observation DO avec sa projection sur un plan horizontal PF. A cet effet, le logiciel combine l'angle d'observation relatif BETA qu'il vient de calculer avec l'angle d'assiette ALPHA fourni par l'inclinomètre embarqué 6 lors de la capture d'image. Le logiciel applique la formule

$$\text{GAMMA} = \text{BETA} - \text{ALPHA} \quad \text{ou} \quad \text{GAMMA} = \text{BETA} + \text{ALPHA}$$

selon la convention de signe des angles orientés.

Le logiciel calcule par ailleurs la distance Hm entre, d'une part, le point le plus bas PB du cercle 11 de la monture et, d'autre part, le point d'intersection Cm de la droite d'observation DO avec le plan moyen PM du cercle 11 de la monture.

A cet effet, le logiciel peut par exemple mesurer sur l'image capturée une distance Hm' entre le point le plus bas de l'image du cercle 11 de la monture et le centre de l'image de la pupille PU (en l'espèce le centre du reflet cornéen RC). Le logiciel en déduit alors la hauteur Hm dans le plan PM au moyen de la formule :

$$\text{Hm} = \text{Hm'} / \cos(\text{GAMMA-TETA}).$$

Enfin, le logiciel calcule la hauteur d'oeil H au moyen de la formule suivante :

$$\text{H} = (\text{Hm} + \text{d(CRO,C)}.\sin(\text{GAMMA})) / \cos(\text{TETA-GAMMA}) \,,$$

où d(CRO,C) est la distance entre le centre de rotation CRO de l'oeil considéré, en l'espèce l'oeil droit OD, et le point C. Cette distance d'oeil est déterminée par exemple à partir d'une mesure de la distance d(PU,C) entre la pupille et le point C auquel on ajoute un rayon d'oeil moyen ou déduit approximativement de la prescription du porteur. La distance d(PU,C), généralement appelée distance lentille-oeil, peut être aisément obtenue au moyen d'une mesure directe sur le porteur à l'aide d'un simple réglet, d'une mesure automatique ou manuelle sur une prise de vue de profil, d'une mesure automatique ou manuelle de face avec un système de télémétrie tel qu'un stigmomètre ou télémètre à prisme du type Dodin ou analogue. On peut aussi réaliser une mesure indirecte à partir d'une combinaison de deux prises de vues frontales associée à un calcul de parallaxe, cette dernière méthode permettant d'obtenir directement la distance d(CRO,C) recherchée.

En alternative, on peut aussi utiliser la formule suivante :

$$H = (Hm + d(CRO,Cm).\sin(GAMMA)) / \cos(TETA).$$

En variante, on peut aussi déduire de la distance d(CRO,C) la position du centre de rotation CRO de l'oeil sur la droite d'observation DO, puis en déduire l'intersection de la droite de visée à l'infini DVI avec le plan moyen PM du cercle 11 de la monture, ce qui correspond au point C recherché.

En variante, on pourrait aussi prévoir que, lors de la capture d'image, le porteur ne regarde pas l'appareil de capture d'image, mais regarde droit devant lui, suivant la droite de visée à l'infini DVI. Ceci favoriserait le respect par le porteur de la posture orthostatique définie précédemment. Dans ce cas, on procède comme exposé ci-dessus, mais en appliquant in fine la formule suivante pour le calcul de la hauteur d'oeil H :

$$H = (Hm + d(PU,C).\sin(GAMMA)) / \cos(TETA-GAMMA) ,$$

où d(PU,C) est la distance entre la pupille PU de l'oeil et le point C, cette distance étant mesurée de l'une des manières mentionnées précédemment.

En variante, on pourrait encore prévoir que, lors de la capture d'image, l'appareil de capture d'image 1 soit orienté de telle sorte que le point remarquable soit centré sur une marque de centrage du système de visée de l'appareil de capture d'image 1 de telle sorte que l'axe optique AO de l'appareil de capture d'image 1 soit confondu avec la droite d'observation DO. Le décentrement est alors nul, ainsi que la valeur de l'angle BETA.

Il est de plus avantageusement prévu une méthode d'auto-diagnostique de l'intégrité géométrique de l'accessoire de repérage et, partant, de la validité des calculs effectués. En effet, l'accessoire de repérage 20 possédant au moins quatre marques 33, 38, 46 et 47, une image quelconque de cet accessoire de repérage 20 donne huit coordonnées pour ces quatre marques représentées en deux dimensions. Ces huit coordonnées permettent de définir un système de huit équations grâce aux étapes d'étalonnage décrites précédemment. La détermination de la position relative de l'accessoire de repérage 20 par rapport à l'appareil de capture d'image correspond à la détermination de seulement six inconnues (trois translations et trois rotations). Le système de huit équations à six inconnues est donc surdéterminé, et sa résolution donne un résidu. Le calcul de ce résidu permet un auto-diagnostique portant sur la validité des résultats obtenus par résolution de ce système. En effet, si le modèle déterminé lors de l'étalonnage de l'accessoire de repérage représente correctement la géométrie de cet accessoire de repérage au moment de la mesure, la valeur de ce résidu est très faible. Un résidu très petit montre donc que l'accessoire de repérage n'a pas été déformé depuis l'étape d'étalonnage. En revanche, si la valeur du résidu est grande, l'accessoire de repérage ne correspond plus au modèle déterminé lors de l'étalonnage, ce qui signifie que l'accessoire de repérage a été déformé. Dans ce cas, le système émet une alerte signalant que la mesure risque d'être fausse et suggère d'effectuer un nouvel étalonnage de l'accessoire de repérage en l'état avant de réaliser une nouvelle mesure.

Une variante de cette méthode d'auto-diagnostique consiste à ajouter deux inconnues au système. On peut choisir par exemple de mesurer une composante en z pour les deux marques 46 et 47 des extrémités de l'étrier 21, ce qui correspond à une déformation en flexion de l'accessoire de repérage 20 autour d'un axe vertical transversal à l'axe de la licorne 30. On introduit alors deux paramètres zd et zg tel que les coordonnées des marques 47 et 46 s'écrivent respectivement (d, 0, zd) et (-g, 0, zg) dans le référentiel de l'accessoire de repérage 20. Le système de huit équations possède ainsi huit inconnues et n'est plus surdéterminé. Les coordonnées des composantes en z des marques 46 et 47 sont déterminées lors de la résolution du système, et comparées à celle du modèle de l'accessoire de repérage déterminé par l'étalonnage. Si les coordonnées calculées sont différentes de celles du modèle, l'accessoire de repérage à été déformé. Cette déformation est ici quantifiée et le système peut émettre une alerte si la différence des coordonnées des composantes en z des marques 46 et 47 dépasse un certain seuil.

Le principe de cette méthode d'auto-diagnostique peut être appliqué à d'autres parties ou sous-parties de l'accessoire de repérage comportant un jeu de marques adéquates et modélisées par un jeu de paramètres. Elle repose sur le choix préalable d'un mode de déformation probable. On peut considérer par exemple que l'accessoire de repérage ne se déforme pas en élongation selon la direction transversale de l'étrier, mais se déforme facilement par courbure ou torsion.

On obtient ainsi une mesure de distance et de remise à l'échelle correcte, ce qui permet d'assurer des mesures de géométrie de monture et de morphologie du porteur exactes et précises.

Avantageusement, le modèle de l'accessoire de repérage peut être affiné par une méthode d'apprentissage. Le modèle de l'accessoire de repérage contient plusieurs paramètres globaux, dont un jeu de paramètres fixes et un jeu de paramètres ajustables correspondant respectivement à des parties rigides non déformables et à des parties souples déformables de l'accessoire de repérage. Le principe de l'amélioration du modèle par apprentissage consiste à utiliser une série d'images sur lesquelles l'accessoire de repérage conserve la même géométrie. Les paramètres fixes sont par définition les mêmes pour toutes les images, et les paramètres ajustables déterminés à partir des images devraient être identiques pour toute la série d'images considérée. Si l'on capture un nombre suffisant d'images, le système est surdéterminé, et le résidu peut être exploité pour évaluer la confiance dans la mesure, ou augmenter éventuellement le modèle en transformant des paramètres fixes en paramètres ajustables dans le cas où le résidu résultant de la résolution du système est trop important.

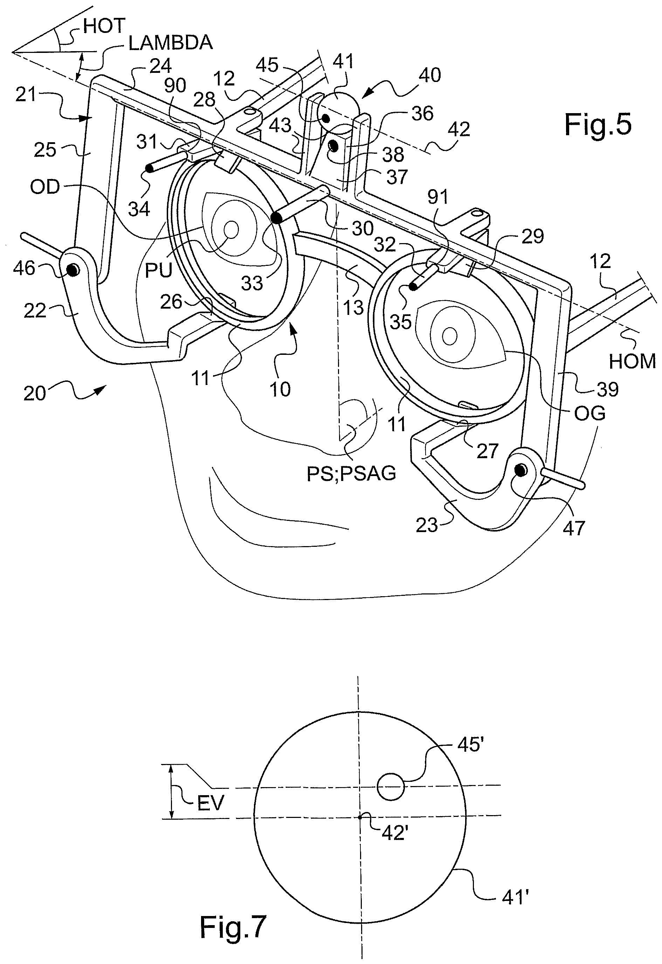

Les figures 5 et 6 illustrent un second mode de réalisation du dispositif et du procédé de mesure selon l'invention. Le dispositif de mesure est similaire à celui qui a été décrit précédemment en référence aux figures 3 et 4 et les éléments repris se retrouvent avec les mêmes références numériques. Deux modifications principales ont été apportées : d'une part, l'appareil de capture d'image 1 est dépourvu d'inclinomètre embarqué, d'autre part, l'accessoire de repérage est pourvu d'un dispositif d'horizon artificiel 40.

Le dispositif d'horizon artificiel 40 comporte une bille de référence d'horizon 41 montée sur l'étrier 21 pour tourner librement autour d'un axe 42 parallèle à la traverse 24, donc horizontal. Plus précisément, la bille 41 est montée entre les extrémités de deux branches verticales d'une fourche 43 s'élevant en saillie de la traverse 24 de part et d'autre du totem 36, de telle sorte que la bille 41 surplombe ce totem.

La bille 41 est lestée ou évidée asymétriquement, de telle sorte que son centre de gravité soit décalé par rapport à son axe de rotation 42. La bille 41 est donc amenée à conserver naturellement, par effet de rappel gravitaire, une position angulaire fixe par rapport au plan horizontal PF, quelle que soit l'angle d'inclinaison pantoscopique TETA de la monture.

La bille 41 présente une surface sphérique portant une marque ponctuelle 45 qui, lorsque la sphère 41 est en position stabilisée de rappel gravitaire, est située au sommet de l'hémisphère avant formée par la partie avant de la surface de la bille 41 délimitée par le plan vertical contenant l'axe de rotation 42.

En service, l'opticien capture une image du visage du porteur équipé de la monture et de l'accessoire de repérage, comme indiqué précédemment. Sur l'image capturée du visage du porteur, comme représenté sur la figure 7, apparaît une image 41' de la bille de référence d'horizon 41.

Le logiciel identifie, sur l'image capturée, l'image 41' de la bille de référence d'horizon 41, puis mesure l'écart vertical EV entre le centre 42' du contour de l'image 41' de la bille 41 (qui correspond à l'image du centre 42 de la bille 41) et le centre de l'image 45' de la marque 45, compte-tenu de la remise à l'échelle. Cet écartement est représentatif de l'angle d'assiette ALPHA de l'appareil de capture d'image 1. On a en effet la relation :

$$ALPHA = \arcsin(EV/R) - OMEGA$$

où R est le rayon de la bille 41 et OMEGA l'angle, dit angle d'observation bille, formé entre, d'une part, une droite d'observation bille DOB reliant le centre de pupille 7 de l'appareil de capture d'image 1 au centre 42 de la bille 41 et, d'autre part, l'axe optique AO de l'appareil de capture d'image 1. Cet angle d'observation bille OMEGA est directement déduit par le logiciel, compte-tenu de la remise à l'échelle, de la mesure, sur l'image capturée, d'un décentrement de l'image 42' du centre de la bille 41 par rapport à un centre d'image associé à l'axe optique AO de l'appareil de capture d'image 1 et correspondant à l'image F' du point F d'intersection de l'axe optique AO avec le plan PM.

Le logiciel est de plus conçu pour calculer, à partir de l'image capturée, un angle de roulis absolu porteur LAMBDA de l'accessoire de référence 21 et donc de la tête du porteur en posture naturelle. Cet angle LAMBDA est représenté sur la figure 5 et correspond à l'angle formé par la droite boxing supérieure HOM joignant les sommets des patins en V 28, 29 avec sa projection orthogonale sur le plan horizontal terrestre HOT. Cet angle de roulis absolu porteur LAMBDA en posture naturelle du porteur est utile pour le calcul optique et/ou l'adaptation des lentilles au porteur et à la monture choisie.

L'angle de roulis absolu porteur LAMBDA est déterminé de la façon suivante par le logiciel de traitement d'image et de calcul installé sur l'ordinateur 8.

On définit une ligne d'horizon interne HOA liée à l'appareil de capture d'image 1, qui constitue un paramètre interne du logiciel interne de l'appareil 1 et qui est attachée à l'image capturée, de telle manière que cette ligne HOA soit parallèle au plan horizontal terrestre HOT lorsque l'angle absolu de roulis de l'appareil de capture d'image 1 est nul.

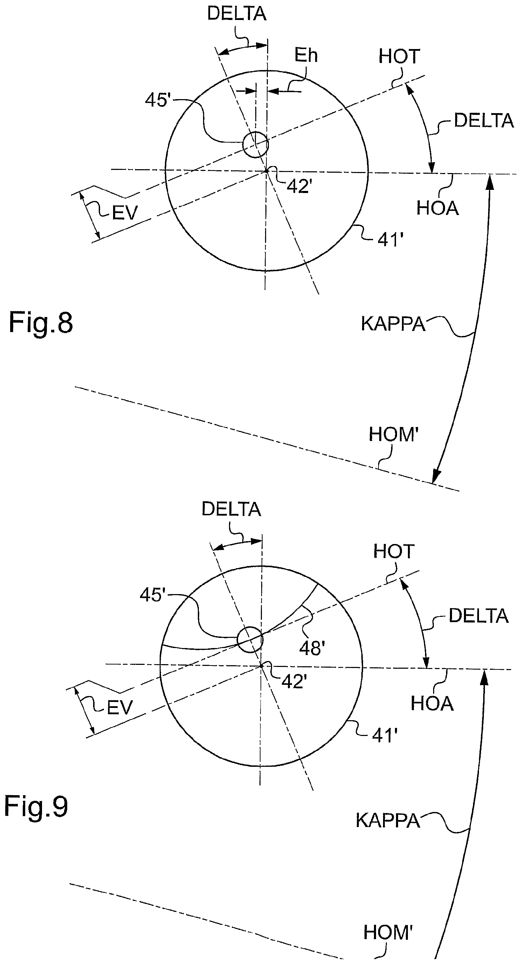

Le logiciel détermine l'angle de roulis relatif KAPPA de l'accessoire de référence 21 dans le référentiel de l'appareil de capture d'image 1. Comme illustré par les figures 8 et 9, cet angle KAPPA est celui formé, sur l'image capturée, entre la ligne d'horizon interne HOA de l'appareil de capture d'image 1 et l'image d'une droite d'horizon quelconque liée au porteur (directement ou indirectement) telle que l'image HOM' de la droite HOM liée à l'accessoire 21 et à la monture 10 ou encore la droite joignant les images des marques 46, 47. Cette droite d'horizon liée au porteur est déterminée par un simple traitement d'image à partir de points caractéristiques identifiables par le logiciel.

Le logiciel détermine ensuite un angle de roulis absolu appareil DELTA de l'appareil de capture d'image 1 autour de son axe optique AO ou autour de la projection de son axe optique sur un plan horizontal. Cet angle est celui que forme la ligne d'horizon interne HOA avec sa projection sur le plan horizontal terrestre HOT.

Cet angle DELTA peut être déterminé de différentes manières.

L'angle DELTA peut par exemple être capté directement par un inclinomètre équipant l'appareil de capture d'image 1, comme mentionné précédemment pour la détermination de l'angle d'assiette de l'appareil de capture d'image 1.

Le logiciel calcule alors par addition ou soustraction de l'angle de roulis absolu appareil DELTA et de l'angle de roulis relatif KAPPA (selon les conventions de signes) l'angle de roulis absolu porteur LAMBDA de l'accessoire de référence 21 et donc de la tête du porteur en posture naturelle.

Dans un perfectionnement illustré par la figure 8, on peut prévoir que le logiciel détermine l'angle de roulis absolu appareil DELTA de l'appareil de capture d'image 1, sans capteur propre implanté sur l'appareil 1, mais à partir de l'image capturée. Pour cela, on peut par exemple prévoir les aménagements suivants. La bille de référence d'horizon 41 est montée pour tourner librement autour d'un second axe de rotation horizontal perpendiculaire à l'axe 42. Ce second axe de rotation est parallèle à la droite d'observation à l'infini DOI. La bille de référence d'horizon est de plus lestée ou évidée asymétriquement, de telle sorte que son centre de gravité soit décalé par rapport à ce second axe de rotation. La bille 41 est donc amenée à conserver naturellement, par effet de rappel gravitaire, une position angulaire fixe par rapport au plan horizontal PF, quelle que soit l'angle absolu de roulis de la monture.

En variante, on peut utiliser un niveau à bulle circulaire, du type proposé par la société LEVEL DEVELOPMENT, de référence AV12 230', associé à un miroir de renvoi à 45°. La bulle est alors l'analogue de la marque ponctuelle 45.

Pour calculer l'angle de roulis absolu appareil DELTA, le logiciel mesure, sur l'image capturée, telle que représentée sur la figure 8, le décalage horizontal Eh (suivant la ligne d'horizon interne HOA) de l'image 45' de la marque ponctuelle 45 par rapport au centre de l'image 41' de la bille 41. Alternativement, le logiciel peut aussi calculer par traitement de l'image l'angle entre la ligne d'horizon interne HOA et la droite reliant le centre géométrique de l'image de la bille 41 au centre de l'image de la marque 45'. Le complémentaire de cet angle correspond à l'angle de roulis absolu appareil DELTA recherché.

En variante illustrée par la figure 9, on peut aussi prévoir avantageusement que la surface de la bille de référence 41 est, en plus de la marque ponctuelle 45, pourvue d'une marque linéaire de latitude 48 qui est parallèle au plan horizontal terrestre HOT lorsque l'angle de roulis absolu porteur LAMBDA est nul, c'est-à-dire en l'espèce lorsque la droite HOM est sensiblement horizontale. L'orientation de l'image 48' de la marque de latitude 48 sur l'image capturée est alors représentative de l'angle de roulis absolu appareil DELTA de l'appareil de capture d'image 1.

La figure 9 illustre, dans cette hypothèse, l'image capturée par l'appareil de capture d'image 1. On a noté HOT la tangente à l'image 48' de la marque de latitude 48 en son intersection avec l'image 45' de la marque ponctuelle 45. Cette tangente HOT est représentative de l'horizon terrestre. L'angle de roulis absolu appareil DELTA recherché est l'angle que forme la tangente d'horizon HOT avec la ligne d'horizon interne HOA de l'appareil de capture d'image 1. Il est calculé en tant que tel par traitement de l'image capturée.

Le logiciel calcule par ailleurs l'angle de galbe de la monture 10. On sait que l'angle de galbe de la monture correspond globalement à l'angle du dièdre formé par les plans moyens des deux cercles (ou des deux verres de présentation dans le cas de lunettes à montage percé, sans cercles).

Le logiciel détecte à cet effet, sur l'image capturée, la position de l'extrémité 34, 35 de chaque licorne latérale 31, 32 et calcule la distance horizontale entre cette extrémité 34, 35 de la licorne latérale 31, 32 considérée, d'une part, et l'embase 90, 91 de cette licorne, d'autre part. Ces écartements respectifs des extrémités 34, 35 des licornes latérales 31, 32 au plan de symétrie PS sont représentatifs des angles d'orientation horizontale, c'est-à-dire autour de la verticale, des licornes latérales 31, 32. Comme les licornes latérales 31, 32 sont solidaires des patins 28, 29 qui s'orientent d'eux-mêmes autour de la verticale en correspondance avec le plan moyen de chacun des cercles 11 de la monture (ou des verres de présentation correspondant dans le cas de lunettes à montage percé, sans cercles), le logiciel déduit alors des positions des extrémités 34, 35 des licornes latérales 31, 32, l'orientation de chacun des cercles 11 de la monture autour de la verticale et, partant, le galbe de la monture.

Le logiciel peut d'autre part, avantageusement opérer des corrections d'anamorphose de l'image résultant des défauts horizontal et vertical de parallélisme du plan de capture d'image PCI avec le plan de l'étrier 21 ou, autrement dit, du fait que la prise de vue n'est pas effectuée de face. Le logiciel peut à cet effet par exemple exploiter l'image de la licorne centrale 30 pour quantifier le défaut de parallélisme de cette licorne centrale par rapport à l'axe optique AO et en déduire une matrice de correction de l'anamorphose de l'image.

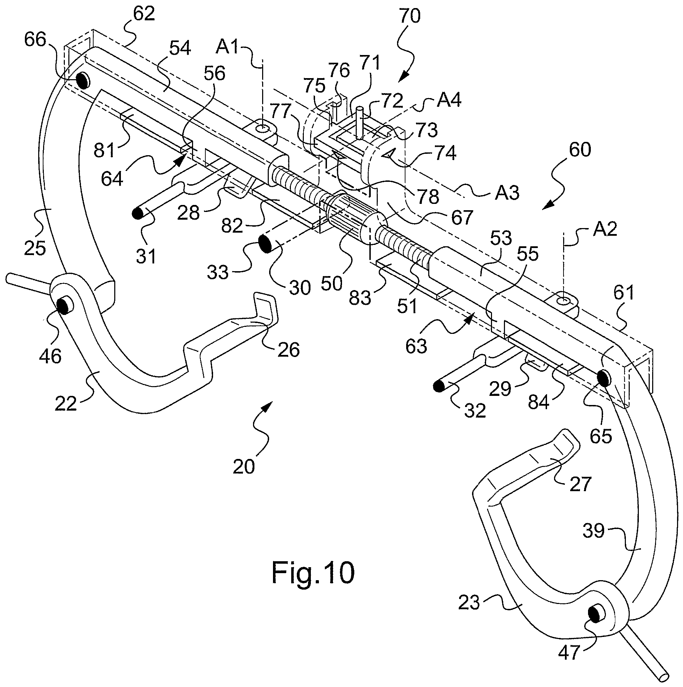

La figure 10 illustre une variante du second mode de réalisation du dispositif et du procédé de mesure selon l'invention. Le dispositif de mesure est similaire à celui qui a été décrit précédemment en référence aux figures 3 et 4 et les éléments repris se retrouvent avec les mêmes références numériques. Deux modifications principales ont été apportées: d'une part, la traverse horizontale a été scindée en deux éléments de traverses horizontaux 54 et 53 dont l'écartement est réglable, et d'autre part, l'accessoire de repérage 20 a été pourvu d'un dispositif d'horizon artificiel 60 utilisant un dispositif de pendule à deux couteaux 70.

L'accessoire de repérage 20 peut être ici adapté à la largeur de la monture de lunettes sur laquelle il est fixé. Les deux éléments de traverses 54 et 53 s'étendent dans un plan sensiblement horizontal et sont prolongés dans un plan sensiblement vertical par deux montants 25 et 39 dont les extrémités pointent vers le bas. Comme dans le mode de réalisation représenté sur la figure 3, deux leviers de verrouillage 22 et 23 sont montés sur les extrémités des montants 25 et 39, et des patins 26, 28 et 27, 29 en forme de V et pourvus d'un revêtement anti-dérapant équipent respectivement le levier 22, l'élément de traverse horizontal 54, le levier 23 et l'élément de traverse horizontal 53. Des licornes latérales 31, 32, sont montées sur des parties saillantes 55, 56 des éléments de traverses horizontaux 54, 53 pour pivoter autour d'un axe vertical A1 et A2, comme dans le mode de réalisation représenté sur la figure 3. La fixation de l'accessoire de repérage 20 et la détermination de la composante horizontale de l'orientation de ce dispositif grâce aux licornes 31 et 32 se font donc ici de la même manière que dans le mode de réalisation rattaché à la figure 3.

Dans la variante de l'accessoire de repérage 20 décrit sur la figure 10, les deux éléments de traverses 53 et 54 présentent un perçage taraudé débouchant à leur extrémité libre pour permettre leur coopération avec une tige filetée 51. Cette tige filetée 51 est pourvue d'une molette centrale 50, solidaire de ladite tige filetée. L'actionnement par rotation de cette molette 50 permet de visser la tige filetée 51 à l'intérieur du perçage taraudé des éléments de traverse 53, 54, ou de la dévisser. Ceci permet donc d'augmenter ou de réduire la longueur de la tige filetée 51 comprise entre les deux extrémités libres des éléments de traverses horizontaux 54 et 53. La longueur totale de l'accessoire de repérage 20 selon l'axe commun des éléments de traverses horizontaux peut alors avantageusement être ajustée, de sorte que les patins 26, 28 et 27, 29 soient positionnés à la verticale de la pupille concernée du porteur, sensiblement au niveau du centre des lentilles portées par la monture de lunettes. Ceci assure que les angles mesurés par le dispositif correspondent bien à ceux recherchés que forme le plan tangent à la lentille au point de centrage pupillaire et ne soient pas faussés par un défaut de montage de l'accessoire de repérage 20 sur la monture de lunettes 10.

Le dispositif d'horizon artificiel 60 est une variante du dispositif à bille présenté précédemment. Il est porté par un support 60 comprenant deux parties latérales horizontales 61 et 62, quatre plaquettes de fermeture 81, 82, 83, 84 et un promontoire 67. Les deux parties latérales horizontales 61, 62 en forme de U entourent les éléments de traverses horizontaux 53 et 54 de façon à ce que le fond des parties latérales en U repose sur eux. Quatre plaquettes de fermeture 81, 82, 83, 84 ferment ces parties latérales en U autour des éléments de traverses 53, 54. Ces plaquettes sont positionnées de part et d'autre des parties saillantes 55, 56 de manière à délimiter entre elles des ouvertures 64 et 63 où les éléments des traverses 53, 54 peuvent coulisser. La course des éléments de traverses 53,54 est limitée par la venue en butée des parties saillantes 55, 56 contre les plaquettes de fermeture 81 à 84. Le promontoire 67 du dispositif d'horizon artificiel 60 supporte d'une part une licorne 30 munie d'une marque contrastée 33 à son extrémité, et d'autre part un pendule à deux couteaux 70.

Le pendule à deux couteaux 70 comprend un cadre 77 monté mobile autour d'un axe A3 parallèle à l'axe commun des éléments de traverses horizontaux, grâce à deux doigts 75 reposant dans deux berceaux en V 74 ménagés sur le promontoire 67 selon l'axe A3. A l'intérieur de ce cadre 77, une pyramide à base carrée 73 dont la pointe est tournée vers le bas, vers l'intérieur de l'élément de repérage 60, est montée pour pivoter autour de l'axe A4 grâce à deux doigts reposant dans deux berceaux en V 78 du cadre 77. Cette pyramide est telle que son centre de gravité est situé en dessous de l'axe de rotation A4, si bien qu'elle subit un effet de rappel gravitaire similaire à celui décrit précédemment dans le cas de l'horizon artificiel à bille. Les doigts 75 du cadre 77 sont mis en place dans les berceaux 74 grâce aux rainures 76 qui permettent de faire glisser le cadre 77 au centre du promontoire 67. La pyramide 73 est mise en place dans les berceaux en V 78 ménagés dans le cadre 77 et est maintenue par un couvercle 71 recouvrant le cadre 77. Une tige 72 est fixée sur la base de la pyramide 73 et pointe vers le haut. Les deux degrés de liberté de la tige 72 assurent que celle-ci reste sensiblement verticale. L'orientation de cette tige 72 est donc un repère de l'axe vertical sur les images capturées de l'accessoire de repérage 20. L'angle entre la tige 72 et la face avant du cadre 77 renseigne donc sur l'inclinaison de l'accessoire de repérage 20 autour de l'axe A4, c'est-à-dire l'angle d'assiette. L'inclinaison de l'accessoire de repérage 20 autour de l'axe A3, c'est-à-dire l'angle de roulis, peut être estimé en mesurant la hauteur de la face avant du cadre 77 par rapport aux deux parties latérales 61, 62.

L'accessoire de repérage 20 porte cinq marques contrastées. En plus de celles décrites sur la figure 3, la marque 33 portée par la licorne 30, et les marques 46, 47 portées par les montants verticaux 25, 26, deux autres marques 65 et 66 sont situées aux extrémités des éléments de support 62 et 63 entourant les éléments de traverses horizontaux 54 et 53, sur leur face avant (sensiblement perpendiculaire au plan sagittale PSAG). Les positions respectives dans

**EP 2 137 569 B1**

l'espace à trois dimensions des marques 33, 46, 47, 65 et 66 constituent des caractéristiques géométriques connues qui sont mémorisées en tant que paramètres fixes du logiciel de calcul installé sur l'ordinateur 8.

La présente invention n'est nullement limitée aux modes de réalisation décrits et représentés, mais l'homme du métier saura y apporter toute variante conforme à son esprit.

On pourra en particulier avantageusement prévoir que le dispositif et le procédé soient conçus pour fonctionner pour une orientation du plan de Francfort qui n'est pas parallèle au plan horizontal terrestre. Il suffit dans cette hypothèse de mesurer l'angle d'inclinaison du plan de Francfort par rapport à l'horizontale terrestre et de corriger en fonction de cet angle l'angle d'assiette ALPHA et l'angle d'observation absolu GAMMA. On peut en particulier, à cet effet prévoir que le logiciel de traitement et de calcul déduit un port de tête prévisible du porteur à partir de l'angle absolu de visée que forme la direction de regard (ou droite de visée DV) avec l'horizontale lors de la capture d'image, compte tenu d'une fonction de corrélation comportementale tirée d'un abaque générique ou d'une analyse comportementale personnalisée du porteur en question.

Bien que, dans les exemples donnés précédemment, la mesure de l'angle vertical d'observation absolu soit réalisée à partir de la mesure de l'angle d'assiette de l'appareil de capture d'image, il est également possible de prévoir que la mesure de l'angle vertical d'observation absolu soit réalisée à partir de la mesure de l'altitude au moins relative de l'appareil de capture d'image par rapport à la tête du porteur. Dans ce cas, des moyens de mesure, comme par exemple un système de mesure du type de ceux commercialisés par la société Polhemus ou tout autre système de télémétrie par ultrason, laser, triangulation, stigmomètre type Dodin ou analogue, sont prévus pour mesurer la position verticale de l'appareil de capture d'image et ces moyens se substituent à l'inclinomètre ou à l'horizon artificiel qui sont utilisés dans les exemples précédemment décrits et qui deviennent alors superflus.

De manière plus générale, on peut prévoir que le logiciel mesure, à partir de la seule image capturée frontalement, la position et l'orientation de l'appareil de capture d'image, et en particulier son angle d'inclinaison verticale (assiette) et/ou horizontale (roulis), en mesurant une déformation liée à la perspective d'au moins un objet connu présent dans le champ de l'appareil de prise d'image. Par exemple, des lignes (typiquement, verticales et/ou horizontales) et parallèles entre elles sont positionnées derrière le porteur et le logiciel mesure, sur l'image capturée, l'angle entre les images de ces droites sur l'image capturée, ce qui lui permet d'en déduire l'inclinaison verticale de l'appareil de capture d'image. A titre d'exemple, les lignes verticales restent parallèles sur l'image uniquement quand l'angle d'inclinaison verticale (assiette) de l'appareil photo est nul.

Dans l'exemple illustré, la paire de lunettes est de type cerclée, c'est-à-dire que les lentilles sont montées dans les cercles de la monture. En variante, la paire de lunettes de présentation peut être de type percée, c'est-à-dire que les lentilles sont percées et fixées chacune, à la faveur des perçages ainsi réalisés, à une extrémité du pontet nasal et une extrémité de la branche correspondante de la monture. Le procédé décrit peut également être appliqué dans le cas d'une telle paire de lunettes de type percée. Dans ce cas, l'accessoire de repérage est directement fixé sur la lentille de présentation correspondante. Les calculs ou mesures réalisés relativement aux cercles (géométrie, orientation) dans la description ci-dessus sont alors réalisés relativement aux lentilles de présentation montées sur la monture de type percée.

Le système de traitement et de calcul de l'image acquise consiste, dans l'exemple illustré, en un microordinateur sur lequel est installé un logiciel de traitement et de calcul de l'image acquise. En variante, on peut prévoir que le système de traitement et de calcul soit un système autonome qui comporte, d'une part, un écran d'affichage pour communiquer les résultats obtenus et, d'autre part, une connectique pour permettre de communiquer ces résultats à d'autres appareils. On peut également prévoir dans le cas d'un système autonome de traitement que ce système soit intégré ou non aux moyens de capture d'images.

Enfin, l'ordre d'exécution des étapes n'est pas limitatif et l'homme du métier saura le modifier à sa guise tout en préservant la cohérence d'ensemble du procédé.

**Revendications**

**1.** Procédé de mesure d'au moins un paramètre géométrico-physionomique (H, TETA) d'implantation d'une monture (10) de lunettes de correction visuelle sur le visage d'un porteur en vue du montage et/ou du calcul personnalisé des lentilles correctrices associées à cette monture, comportant une étape de capture d'une image numérique sensiblement frontale du visage du porteur équipé au moins de la monture (10), au moyen d'un appareil de capture d'image (1), et une étape de calcul du paramètre géométrico-physionomique (H, TETA) à partir d'un traitement de l'image capturée, **caractérisé en ce que** le calcul du paramètre géométrico-physionomique (H, TETA) comporte une identification, sur cette image, de l'image d'un point remarquable prédéterminé (RC), directement ou indirectement associé au visage du porteur ou à la monture, et prend en considération une grandeur représentative de l'angle vertical d'observation absolu (GAMMA) que forme une droite d'observation (DO), reliant la pupille (7) de l'appareil de capture d'image (1) et le point remarquable (RC), avec sa projection sur un plan horizontal (PF).

**2.** Procédé selon la revendication précédente, dans lequel l'appareil de capture d'image (1) est un appareil nomade tenu à la main par un opérateur lors de la capture d'image.

**3.** Procédé selon l'une des revendications précédentes, dans lequel, pour mesurer l'angle vertical d'observation absolu (GAMMA), on mesure un angle d'assiette (ALPHA) que forme l'axe optique (AO) de l'appareil de capture d'image (1) avec sa projection sur le plan horizontal (PF).

**4.** Procédé selon la revendication 3, dans lequel, la mesure de l'angle d'assiette (ALPHA) est fournie par un inclinomètre équipant l'appareil de capture d'image, adapté à fournir un signal représentatif de la valeur prise par l'angle d'assiette (ALPHA) au moment de la capture d'image.

**5.** Procédé selon la revendication 3, dans lequel, préalablement à la capture d'image, on équipe la tête du porteur (TP) d'un dispositif d'horizon artificiel (40) comportant un élément de référence d'horizon (41) mobile en rotation autour d'un axe (42) perpendiculaire au plan sagittal (PSAG) et adapté à conserver une position fixe par rapport au plan horizontal (PF), cet élément de référence d'horizon ayant une caractéristique géométrique connue, et dans lequel, après la capture d'image, on identifie, sur l'image capturée, l'image de cet élément de référence d'horizon (41), on mesure une caractéristique géométrique (Ev) de cette image correspondant à la caractéristique géométrique connue de cet élément de référence d'horizon et on calcule l'angle d'assiette (ALPHA) en fonction de la caractéristique géométrique mesurée de l'image capturée et de la caractéristique géométrique connue de l'élément de référence d'horizon.

**6.** Procédé selon la revendication précédente, dans lequel le calcul de l'angle d'assiette (ALPHA) est de plus fonction d'un angle d'observation relatif de référence (OMEGA) formé entre, d'une part, une droite d'observation (DOB) passant par un point de l'élément de référence d'horizon (41) et par la pupille (7) de l'appareil de capture d'image (1) et, d'autre part, l'axe optique (AO) de l'appareil de capture d'image (1), cet angle d'observation relatif (BETA) étant déduit de la mesure, sur l'image capturée, d'un décentrement de l'image de l'élément de référence d'horizon (41) par rapport à un centre d'image associé à l'axe optique (AO) de l'appareil de capture d'image (1).

**7.** Procédé selon l'une des revendications 3 à 6, dans lequel, pour mesurer l'angle vertical d'observation absolu (GAMMA), on combine l'angle d'assiette (ALPHA) avec un angle d'observation relatif (BETA) formé entre la droite d'observation (DO) et l'axe optique (AO) de l'appareil de capture d'image (1), cet angle d'observation relatif (BETA) étant déduit de la mesure, sur l'image capturée, d'un décentrement de l'image du point remarquable (RC) de l'oeil par rapport à un centre d'image associé à l'axe optique de l'appareil de capture d'image (1).

**8.** Procédé selon l'une des revendications 3 à 6, dans lequel, pour mesurer l'angle vertical d'observation absolu (GAMMA), on fait en sorte que, lors de la capture d'image, l'appareil de capture d'image (1) soit orienté de telle sorte que le point remarquable (RC) soit centré sur une marque de centrage du système de visée de l'appareil de capture d'image (1), l'angle vertical d'observation absolu (GAMMA) étant alors égal à l'angle d'assiette (ALPHA).

**9.** Procédé selon l'une des revendications 1 et 2, dans lequel, pour mesurer l'angle vertical d'observation absolu (GAMMA), on mesure une altitude au moins relative de l'appareil de capture d'image (1) par rapport à la tête du porteur.

**10.** Procédé selon l'une des revendications précédentes, dans lequel le paramètre géométrico-physionomique comporte la hauteur (H) d'un point remarquable (PU) de l'oeil par rapport à la monture et/ou l'angle d'inclinaison pantoscopique (TETA) que forme le plan général de la monture ou de la lentille (PM) par rapport à la verticale.

**11.** Procédé selon l'une des revendications précédentes, dans lequel on dispose sur la monture un élément de repérage pantoscopique (30, 33, 36, 38) qui possède au moins une caractéristique géométrique connue et qui est disposé de telle sorte que l'image frontale capturée au moyen de l'appareil de capture d'image (1) intègre une image de l'élément de repérage pantoscopique (30, 33, 36, 38) et dans lequel, l'image de l'élément de repérage (30, 33, 36, 38) étant traitée pour en mesurer une caractéristique géométrique dépendant de la caractéristique géométrique connue, le calcul du paramètre géométrico-physionomique est fonction de la caractéristique géométrique mesurée et de la caractéristique géométrique connue de l'élément de repérage.

**12.** Procédé selon l'une des revendications précédentes, dans lequel le calcul du paramètre géométrico-physionomique (H, TETA) prend en compte un facteur d'échelle donnant, dans la configuration de capture d'image, la proportionnalité entre une dimension réelle d'un élément géométrique dont l'image est capturée et le nombre de pixels de l'image de cet élément suivant la direction de la dimension considérée.

**Patentansprüche**

1. Verfahren zur Messung mindestens eines geometrischen/physiognomischen Parameters (H, TETA) zwecks Anpassung einer Brille (10) zur Sichtfeldkorrektur an das Gesicht ihres Trägers für die individuell angepasste Montage und/oder Berechnung von zu dieser Brille gehörenden Korrekturlinsen, umfassend einen Schritt des Erfassens eines digitalen Bildes des Gesichts des Trägers, der mindestens mit der Brille (10) ausgestattet ist, im Wesentlichen von vorn mithilfe eines Bilderfassungsgerätes (1) und einen Schritt des Berechnens des geometrischen/physiognomischen Parameters (H, TETA) durch Verarbeitung des erfassten Bildes, **dadurch gekennzeichnet, dass** das Berechnen des geometrischen/physiognomischen Parameters (H, TETA) in diesem Bild eine Erkennung des Bildes eines vorbestimmten bemerkenswerten Punktes (RC) umfasst, der direkt oder indirekt zu dem Gesicht des Trägers oder der Brille gehört, und eine repräsentative Größe des absoluten vertikalen Betrachtungswinkels (GAMMA) berücksichtigt, den eine Betrachtungsgerade (DO), die die Pupille (7) des Bilderfassungsgerätes (1) mit dem bemerkenswerten Punkt (RC) verbindet, mit ihrer horizontalen Projektion (PF) bildet.

2. Verfahren nach dem vorhergehenden Anspruch, bei dem das Bilderfassungsgerät (1) ein mobiles Gerät ist, das bei der Bilderfassung von einem Bediener in der Hand gehalten wird.

3. Verfahren nach einem der vorhergehenden Ansprüche, bei dem zum Messen des absoluten vertikalen Betrachtungswinkels (GAMMA) ein Neigungswinkel (ALPHA) gemessen wird, den die optische Achse (AO) des Bilderfassungsgerätes (1) mit seiner horizontalen Projektion (PF) bildet.

4. Verfahren nach Anspruch 3, bei dem die Messung des Neigungswinkels (ALPHA) durch einen Neigungsmesser bereitgestellt wird, mit dem das Bilderfassungsgerät ausgestattet ist und der geeignet ist, ein repräsentatives Signal für den Wert zu liefern, den der Neigungswinkel (ALPHA) im Moment der Bilderfassung annimmt.

5. Verfahren nach Anspruch 3, bei dem vor der Bilderfassung der Kopf des Trägers (TP) mit einer Vorrichtung eines künstlichen Horizonts (40) versehen wird, umfassend ein mobiles Horizontreferenzelement (41), das um eine zur Sagittalebene (PSAG) senkrechten Achse (42) drehbar und geeignet ist, eine feste Position in Bezug auf die horizontale Ebene (PF) beizubehalten, wobei dieses Horizontreferenzelement eine bekannte geometrische Eigenschaft aufweist, und bei dem nach der Bilderfassung auf dem erfassten Bild das Bild dieses Horizontreferenzelementes (41) erkannt wird, eine geometrische Eigenschaft (Ev) dieses Bildes, das der bekannten geometrischen Eigenschaft dieses Horizontreferenzelementes entspricht, gemessen wird und ein Neigungswinkel (ALPHA) als Funktion der im erfassten Bild gemessenen geometrischen Eigenschaft und der bekannten geometrischen Eigenschaft des Horizontreferenzelementes berechnet wird.

6. Verfahren nach dem vorhergehenden Anspruch, bei dem das Berechnen des Neigungswinkels (ALPHA) außerdem eine Funktion eines relativen Referenzbetrachtungswinkels (OMEGA) ist, der einerseits zwischen einer Betrachtungsgeraden (DOB), die durch einen Punkt des Horizontreferenzelementes (41) und durch die Pupille (7) des Bilderfassungsgerätes (1) verläuft, und andererseits von der optischen Achse (AO) des Betrachtungsgerätes (1) gebildet wird, wobei dieser relative Betrachtungswinkel (BETA) aus dem Maß einer Dezentrierung des Bildes des Horizontreferenzelementes (41) im erfassten Bild in Bezug auf ein Bildzentrum, das zur optischen Achse (AO) des Bilderfassungsgerätes (1) gehört, abgeleitet wird.

7. Verfahren nach einem der Ansprüche 3 bis 6, bei dem zum Messen des absoluten vertikalen Betrachtungswinkels (GAMMA) der Neigungswinkel (ALPHA) mit einem relativen Betrachtungswinkel (BETA), der zwischen der Betrachtungsgeraden (DO) und der optischen Achse (AO) des Bilderfassungsgerätes (1) gebildet wird, kombiniert wird, wobei dieser relative Betrachtungswinkel (BETA) aus dem Maß einer Dezentrierung des Bildes des bemerkenswerten Punktes (RC) des Auges im erfassten Bild in Bezug auf ein Bildzentrum, das zur optischen Achse des Bilderfassungsgerätes (1) gehört, abgeleitet wird.

8. Verfahren nach einem der Ansprüche 3 bis 6, bei dem zum Messen des absoluten vertikalen Betrachtungswinkels (GAMMA) so vorgegangen wird, dass bei der Bilderfassung das Bilderfassungsgerät (1) so ausgerichtet wird, dass der bemerkenswerte Punkt (RC) an einer Zentriermarke des Sichtsystems des Bilderfassungssystems (1) zentriert wird, wobei der absolute vertikale Betrachtungswinkel (GAMMA) dann gleich dem Neigungswinkel (ALPHA) ist.

9. Verfahren nach einem der Ansprüche 1 und 2, bei dem zum Messen des absoluten vertikalen Betrachtungswinkels (GAMMA) eine mindestens relative Höhe des Bilderfassungsgerätes (1) in Bezug zum Kopf des Trägers gemessen wird.

10. Verfahren nach einem der vorhergehenden Ansprüche, bei der geometrische/physiognomische Parameter die Höhe (H) eines bemerkenswerten Punktes (PU) des Auges in Bezug zur Brille und/oder einen pantoskopischen Neigungswinkel (TETA) umfasst, der die allgemeine Ebene der Brille oder der Linse (PM) in Bezug zur Vertikalen bildet.

11. Verfahren nach einem der vorhergehenden Ansprüche, bei dem auf der Brille ein pantoskopisches Orientierungselement (30, 33, 36, 38) verfügbar ist, das mindestens eine bekannte geometrische Eigenschaft aufweist und so angeordnet ist, dass im Bild von vorn, das mithilfe des Bilderfassungsgerätes (1) erfasst wird, ein pantoskopisches Orientierungselement (30, 33, 36, 38) integriert ist, und bei dem das Bild des pantoskopischen Orientierungselementes (30, 33, 36, 38) verarbeitet wird, um dessen geometrische Eigenschaft, die von der bekannten geometrischen Eigenschaft abhängt, zu messen, und die Berechnung des geometrischen/physiognomischen Parameters eine Funktion der gemessenen geometrischen Eigenschaft und der bekannten geometrischen Eigenschaft des Orientierungselementes ist.

12. Verfahren nach einem der vorhergehenden Ansprüche, bei dem das Berechnen des geometrischen/physiognomischen Parameters (H, TETA) einen Maßstabsfaktor berücksichtigt, der in der Bilderfassungskonfiguration die Proportionalität zwischen der realen Abmessung eines geometrischen Elementes, dessen Bild erfasst wird, und der Anzahl der Pixel des Bildes von diesem Element entsprechend der Richtung der betrachteten Abmessung angibt.

## Claims

1. A method of measuring at least one geometrico-physiognomic parameter (H, TETA) for positioning a vision-correcting eyeglass frame (10) on the face of a wearer for personalized calculation and/or mounting of corrective lenses associated with said frame, including a step of using an image-capture appliance (1) to capture a digital image substantially in front view of the wearer's face wearing at least the frame (10), and a step of calculating the geometrico-physiognomic parameter (H, TETA) on the basis of processing the captured image, the method being **characterized in that** the calculation of the geometrico-physiognomic parameter (H, TETA) includes identifying, in the image, the image of a predetermined remarkable point (RC) that is directly or indirectly associated with the wearer's face or with the frame, and it takes into consideration a magnitude representative of the absolute vertical angle of observation (GAMMA) formed between firstly an observation line (DO) connecting the pupil (7) of the image-capture appliance (1) to the remarkable point (RC), and secondly its projection onto a horizontal plane (PF).

2. A method according to the preceding claim, wherein the image-capture appliance (1) is a hand-held appliance held by an operator during image capture.

3. A method according to either preceding claim, wherein, in order to measure the absolute vertical angle of observation (GAMMA), a tilt angle (ALPHA) is measured as formed between the optical axis (AO) of the image-capture appliance (1) and its projection on the horizontal plane (PF) .

4. A method according to claim 3, wherein the measurement of the tilt angle (ALPHA) is provided by a tilt meter fitted to the image-capture appliance and adapted to deliver a signal representative of the value taken by the tilt angle (ALPHA) at the moment of image capture.

5. A method according to claim 3, wherein, prior to image capture, an artificial horizon device (40) is fitted to the wearer's head (TP), the device including a horizon-reference element (41) that is movable in rotation about an axis (42) perpendicular to the sagittal plane (PSAG) and that is adapted to conserve a constant position relative to the horizontal plane (PF), said horizon-reference element having a known geometrical characteristic, and wherein after image capture, the image of said horizon-reference element (41) is identified in the captured image, a geometrical characteristic (Ev) of the image corresponding to the known geometrical characteristic of said horizon-reference element is measured, and the tilt angle (ALPHA) is calculated as a function of the measured geometrical characteristic of the captured image and of the known geometrical characteristic of the horizon-reference element.

6. A method according to the preceding claim, wherein the calculation of the tilt angle (ALPHA) is also a function of a reference relative observation angle (OMEGA) formed between firstly an observation line (DOB) passing through a point of the horizon-reference element (41) and the pupil (7) of the image-capture appliance (1), and secondly the optical axis (AO) of the image-capture appliance (1), said relative observation angle (BETA) being deduced from the measurement of the off-center shift of the image in the captured image of the horizon-reference element (41) relative to an image center associated with the optical axis (AO) of the image-capture appliance (1).

7.  A method according to any one of claims 3 to 6, wherein, in order to measure the absolute vertical observation angle (GAMMA), the tilt angle (ALPHA) is combined with a relative observation angle (BETA) formed between the observation line (DO) and the optical axis (AO) of the image-capture appliance (1), said relative observation angle (BETA) being deduced from measuring the off-center shift in the captured image of the image of the remarkable point (RC) of the eye relative to an image center associated with the optical axis of the image-capture appliance (1).

8.  A method according to any one of claims 3 to 6, wherein, in order to measure the absolute vertical observation angle (GAMMA), arrangements are made such that while capturing the image, the image-capture appliance (1) is oriented so that the remarkable point (RC) is centered on a centering mark of the viewfinder system of the image-capture appliance (1), the absolute vertical observation angle (GAMMA) then being equal to the tilt angle (ALPHA).

9.  A method according to claim 1 or claim 2, wherein, in order to measure the absolute vertical observation angle (GAMMA), an altitude of the image-capture appliance (1) is measured, at least relative to the wearer's head.

10. A method according to any preceding claim, wherein the geometrico-physiognomic parameter includes the height (H) of a remarkable point (PU) of the eye relative to the frame and/or the pantoscopic angle of inclination (TETA) formed by the general plane of the frame or of the lens (PM) relative to the vertical.

11. A method according to any preceding claim, wherein a pantoscopic position-identification element (30, 33, 36, 38) is placed on the frame, which element possesses at least one known geometrical characteristic and is placed in such a manner that the front-view image captured by means of the image-capture appliance (1) incorporate an image of the pantoscopic position-identification element (30, 33, 36, 38), and wherein, the image of the position-identification element (30, 33, 36, 38) being processed to measure therefrom a geometrical characteristic depending on the known geometrical characteristic, the calculation of the geometrico-physiognomic parameter is a function of the measured geometrical characteristic and of the known geometrical characteristic of the position-identification element.

12. A method according to any preceding claim, wherein the geometrico-physiognomic parameter (H, TETA) is calculated taking account of a scale factor that, in the image-capture configuration, gives the proportionality ratio between a real dimension of a geometrical element for which an image is captured and the number of pixels in the image of said element in the direction of the dimension under consideration.

Fig.1

Fig.2

Fig.3

Fig.4

Fig.5

Fig.7

Fig.6

Fig.8

Fig.9

Fig.10

## RÉFÉRENCES CITÉES DANS LA DESCRIPTION

**Documents brevets cités dans la description**

• FR 27196463

**Littérature non-brevet citée dans la description**

• **R.G. WILLSON.** Modeling and Calibration of Automated Zoom Lenses. *Proceedings of the SPIE 2350: Videometrics,* Octobre 1994, vol. III, 170-186